(19) **Europäisches Patentamt / European Patent Office / Office européen des brevets**

(11) **EP 4 664 570 A1**

(12) **EUROPEAN PATENT APPLICATION**
published in accordance with Art. 153(4) EPC

(43) Date of publication:
**17.12.2025 Bulletin 2025/51**

(21) Application number: **24753259.1**

(22) Date of filing: **02.02.2024**

(51) International Patent Classification (IPC):
*H01M 8/04858* (2016.01)  *H01M 8/12* (2016.01)
*H01M 8/249* (2016.01)  *H01M 8/0432* (2016.01)
*H01M 8/0656* (2016.01)  *H01M 8/04225* (2016.01)
*H01M 8/04302* (2016.01)  *H01M 8/04537* (2016.01)
*H01M 8/04746* (2016.01)

(52) Cooperative Patent Classification (CPC):
**H01M 8/04225; H01M 8/04302; H01M 8/0432;
H01M 8/04537; H01M 8/04746; H01M 8/04858;
H01M 8/0656; H01M 8/12; H01M 8/249;
Y02E 60/50**

(86) International application number:
**PCT/JP2024/003489**

(87) International publication number:
**WO 2024/166816 (15.08.2024 Gazette 2024/33)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **06.02.2023 JP 2023015772**

(71) Applicant: **AISIN CORPORATION**
**Kariya-shi, Aichi 448-8650 (JP)**

(72) Inventors:
• **MURAKAMI Taiga**
**Kariya-shi, Aichi 448-8650 (JP)**
• **HAYAKAWA Kojiro**
**Kariya-shi, Aichi 448-8650 (JP)**

(74) Representative: **Cabinet Beau de Loménie
103, rue de Grenelle / CS 90800
75340 Paris Cedex 07 (FR)**

(54) **FUEL CELL SYSTEM**

(57) A fuel cell system includes a plurality of power generation modules each of which includes one or more fuel cell stacks and an auxiliary machine that controls fuel gas and oxidant gas to be supplied to the fuel cell stacks, and the fuel cell stacks are connected in series among the plurality of power generation modules. This system includes a plurality of individual control units each of which controls an auxiliary machine of a corresponding power generation module among the plurality of power generation modules based on a control command, and an integrated control unit that sets a current command in a manner that an output based on a requested output required for a system is obtained within a range in which a voltage of each fuel cell stack in each of the plurality of power generation modules does not fall below a lower limit voltage, and transmits the current command to the plurality of individual control units.

# FIG. 5

Power generation control routine

Input requested power generation output Preq, voltage V of each module, total voltage Vt, and current I ∼ S200

Set target current Itag in range in which voltage V of each module does not fall below lower limit voltage Vlim ∼ S202

Transmit current command Itag to control board of each module ∼ S204

Calculate actual power generation output P
$P = I \times Vt$ ∼ S206

$P < Preq?$ ∼ S208

NO

YES

$Retag < Remax?$ ∼ S210

NO

YES

Perform increase correction of target reflux rate Retag
$Retag \leftarrow Retag + \Delta Re$ S212

Perform reduction correction of target fuel use rate Uftag
$Uftag \leftarrow Uftag - \Delta Uf$ ∼ S216

Input stack correlation temperature Tst ∼ S218

$Tst \geq Tref?$ ∼ S220

NO

YES

Perform reduction correction of target air use rate Uatag
$Uatag \leftarrow Uatag - \Delta Ua$ S222

Is stop of power generation requested? ∼ S214

NO

YES

RET

**Description**

TECHNICAL FIELD

The present specification discloses a fuel cell system.

BACKGROUND ART

Conventionally, as this type of fuel cell system, there has been proposed a fuel cell system including a plurality of fuel cell stacks in which a plurality of fuel cells are connected in series, and an adjustment circuit for adjusting a current value of each fuel cell stack in the series connection, in which a compensation current smaller than a major part of the current flows through at least one adjustment circuit (see, for example, Patent Literature 1).

In addition, as the fuel cell system, there has been proposed a fuel cell system including a plurality of power modules each including at least one fuel cell stack, a plurality of DC/DC converters each having an input terminal and an output terminal and electrically connected to the corresponding power module among the plurality of power modules at the input terminal, and a DC power bus connected in parallel to the output terminals of the plurality of DC/DC converters and electrically connectable to a load (see, for example, Patent Literature 2).

CITATIONS LIST

PATENT LITERATURE

Patent Literature 1: JP 2012-533146 A
Patent Literature 2: JP 2022-523187 A

SUMMARY OF INVENTION

TECHNICAL PROBLEMS

In the system described in Patent Literature 1, an adjustment circuit is required, and since a compensation current flows through the adjustment circuit, efficiency is degraded due to loss, or the cost is increased due to an increase in the number of components. In addition, in the system described in Patent Literature 2, a DC/DC converter is required for each power module, and efficiency is degraded due to switching loss, or the cost is increased due to an increase in the number of components.

The present disclosure provides a fuel cell system capable of obtaining a large output with a simple configuration.

SOLUTIONS TO PROBLEMS

The present disclosure has adopted the following means to achieve the above main object.

A fuel cell system according to the present disclosure including a plurality of power generation modules each of which includes one or more fuel cell stacks that generate power by a reaction between fuel gas and oxidant gas and an auxiliary machine that controls fuel gas and oxidant gas to be supplied to the fuel cell stacks, in which fuel cell stacks are connected in series between the plurality of power generation modules, the fuel cell system including

a plurality of individual control units each of which controls an auxiliary machine of a corresponding power generation module among the plurality of power generation modules based on a control command, and
an integrated control unit that sets a current command in a manner that an output based on a requested output required for a system is obtained within a range in which a voltage of each fuel cell stack in each of the plurality of power generation modules does not fall below a lower limit voltage, and transmits the current command to the plurality of individual control units.

In the fuel cell system according to the present disclosure, the individual fuel cell stacks are connected in series between the plurality of power generation modules, the current command is set in a manner that the output based on the requested output required for the system is obtained within the range in which the voltage of each fuel cell stack in each of the plurality of power generation modules does not fall below the lower limit voltage, and the current command is transmitted to the individual control unit that controls each of the power generation modules. As a result, it is possible to provide a fuel cell system capable of obtaining a large output with a simple configuration.

BRIEF DESCRIPTION OF DRAWINGS

FIG. 1 is a schematic configuration diagram of a fuel cell system according to the present embodiment.
FIG. 2 is a schematic configuration diagram of a plurality of power generation units each including a power generation module and an auxiliary machine.
FIG. 3 is a schematic configuration diagram of the power generation module.
FIG. 4 is a flowchart illustrating an example of an operation mode switching processing routine.
FIG. 5 is a flowchart illustrating an example of a power generation control routine.
FIG. 6 is an explanatory diagram illustrating the relationship between an inter-terminal voltage and a current density of a unit cell.
FIG. 7 is a flowchart illustrating an example of a start-and-stop processing routine.
FIG. 8 is a flowchart illustrating a power generation control routine of a modification.
FIG. 9 is a schematic configuration diagram of a fuel cell system of the modification.

DESCRIPTION OF EMBODIMENTS

Embodiments for carrying out the present disclosure will be described with reference to the drawings.

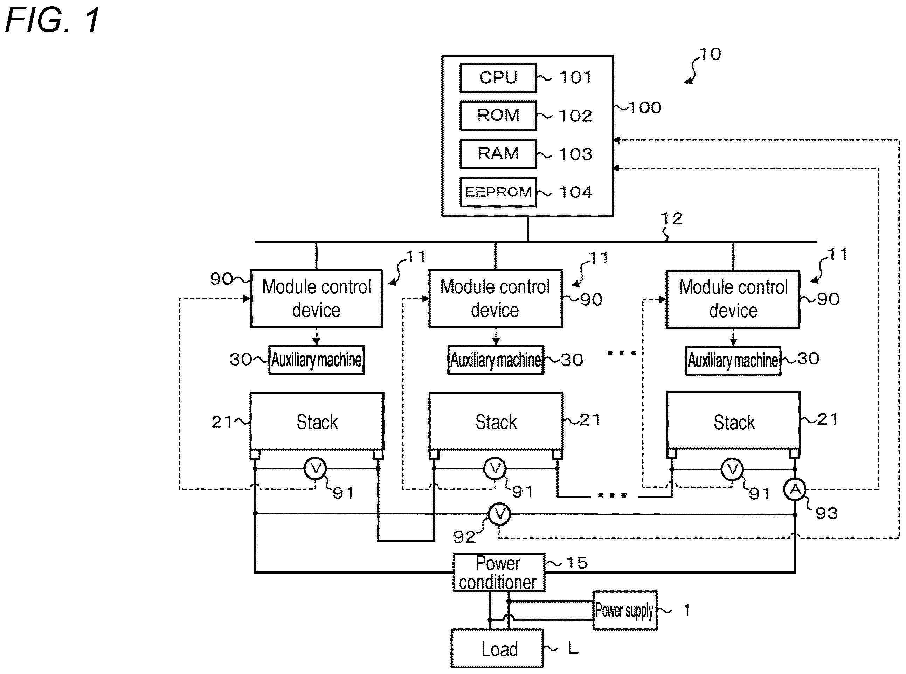

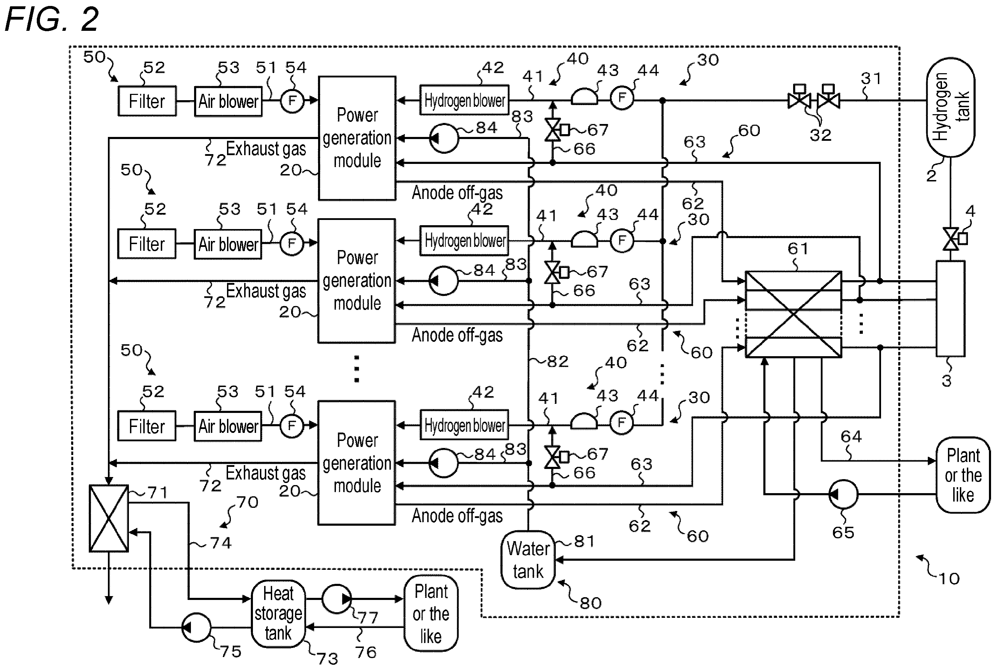

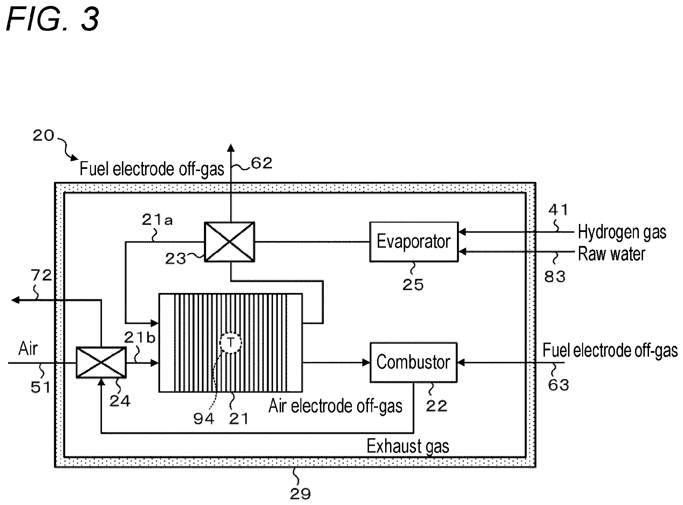

FIG. 1 is a schematic configuration diagram of a fuel cell system 10 according to the present embodiment, FIG. 2 is a schematic configuration diagram of a plurality of power generation units 11 each including a power generation module 20 and an auxiliary machine 30, and FIG. 3 is a schematic configuration diagram of the power generation module 20.

As illustrated in FIG. 1, the fuel cell system 10 of the embodiment includes the plurality of power generation units 11 and an integrated control device 100 that manages the plurality of power generation units 11.

As illustrated in FIG. 1, each of the plurality of power generation units 11 includes the power generation module 20 including a fuel cell stack 21, various auxiliary machines 30 necessary for operation of the fuel cell stack 21, and a module control device 90 that controls various auxiliary machines 30.

As illustrated in FIG. 3, the power generation module 20 includes a combustor 22, heat exchangers 23 and 24, an evaporator 25, and the like in addition to the fuel cell stack 21, and these components are housed in a module case 29 with a heat insulating property. The evaporator 25 may include a heater for compensating heat insufficient in the evaporator 25. The various auxiliary machines 30 include a fuel supply system 40, an air supply system 50, a circulation system 60, an exhaust heat recovery system 70, a water supply system 80, and the like.

The fuel cell stack 21 includes a plurality of solid oxide unit cells each including an electrolyte such as stabilized zirconia (for example, YSZ), a fuel electrode of a composite of a catalytic metal such as Ni and stabilized zirconia or the like disposed on one surface side of the electrolyte, and an air electrode such as LSCF disposed on the other surface side of the electrolyte. In the present embodiment, each fuel cell stack 21 is a reversibly operated solid oxide cell stack, and has a power generation operation mode (FC mode) in which power is generated by a reaction between hydrogen and oxygen contained in air, and an electrolytic operation mode (EC mode) in which hydrogen is generated by high-temperature steam electrolysis in a state where power is supplied from a power supply 1. As the power supply 1, a system power supply, renewable energy such as a solar power generator, a storage battery, or the like can be used. A temperature sensor 94 is disposed near the fuel cell stack 21. The temperature sensor 94 detects a temperature (stack correlation temperature Tst) correlated with the temperature of the fuel cell stack 21.

In the FC mode, hydrogen gas supplied as fuel gas by the fuel supply system 40 is introduced into the fuel electrode of the fuel cell stack 21 through a fuel gas supply pipe 21a, and air supplied as oxidant gas by the air supply system 50 is introduced into the air electrode of the fuel cell stack 21 through an oxidant gas supply pipe 21b. Oxide ions ($O^{2-}$) are generated at the air electrode, and the oxide ions pass through the electrolyte and react with hydrogen at the fuel electrode, thereby obtaining electric energy. The fuel electrode off-gas that has not been used for the electrochemical reaction (power generation) in the fuel electrode of each unit cell exchanges heat with the fuel gas (hydrogen gas) supplied from the fuel supply system 40 to the fuel electrode in the heat exchanger 23, and then is discharged to the outside of the module case 29. The fuel electrode off-gas is then supplied to the circulation system 60 through a fuel electrode off-gas pipe 62, cooled by a condenser 61 provided in the circulation system 60 to remove water vapor contained in the fuel electrode off-gas, and then supplied to the combustor 22 through a fuel electrode off-gas pipe 63. The air electrode off-gas that has not been used for the electrochemical reaction (power generation) in the air electrode of each unit cell is directly supplied to the combustor 22. The fuel electrode off-gas introduced into the combustor 22 is a combustible gas containing hydrogen, is mixed with the air electrode off-gas containing oxygen introduced into the combustor 22, and the mixed gas is combusted in the combustor 22, so that the fuel cell stack 21 is maintained at an appropriate temperature by combustion heat. In the combustor 22, combustion exhaust gas is generated, and the combustion exhaust gas exchanges heat with air supplied from the air supply system 50 to the air electrode in the heat exchanger 24, and then is supplied to the exhaust heat recovery system 70 through a combustion exhaust gas pipe 72. The exhaust heat of the combustion exhaust gas is recovered by the exhaust heat recovery system 70, and then the combustion exhaust gas is discharged to the outside air.

On the other hand, in the EC mode, water vapor and a small amount of hydrogen gas supplied as fuel gas by the water supply system 80 and the fuel supply system 40 are introduced into the fuel electrode of the fuel cell stack 21 through the fuel gas supply pipe 21a, and air supplied as sweep gas by the air supply system 50 is introduced into the air electrode of the fuel cell stack 21 through the oxidant gas supply pipe 21b. When power having a predetermined voltage is supplied between the terminals of the fuel cell stack 21 (reversibly operated solid oxide cell stack) by the power supply 1, water vapor introduced into the fuel electrode is decomposed into hydrogen and oxygen ions ($O^{2-}$) by an electrolytic action in the fuel electrode, and the oxygen ions pass through the electrolyte to generate oxygen in the air electrode. In the present embodiment, since a small amount of hydrogen gas is also supplied to the fuel electrode together with water vapor, the fuel electrode is maintained in a reducing atmosphere, and oxidation deterioration of the fuel electrode can be suppressed. The hydrogen gas generated at the fuel electrode is discharged as a fuel electrode off-gas together with water vapor not subjected to electrolytic reaction, exchanges heat with water vapor or the like supplied from the water supply system 80 to the fuel electrode in the heat exchanger 23, and then is discharged to the outside of the module case 29. The fuel electrode off-gas containing hydrogen gas and water vapor is supplied to the circulation system 60 through the fuel electrode off-gas pipe 62, cooled by the condenser 61 provided in the circulation system 60 to remove the water vapor, and then stored in a hydrogen tank 2 via a collecting pipe 3 and an on-off valve 4. The on-off valve 4 is closed in the FC mode and opened in the EC mode. Part of the fuel electrode off-gas (hydrogen gas) that has passed through the condenser 61 is supplied to the combustor 22 through the fuel electrode off-gas pipe 63. On the other hand, the oxygen gas generated at the air electrode is directly supplied to the combustor 22 as an air electrode off-gas together with the air passing through the air electrode. Combustion heat generated by the combustion of the mixed gas of the fuel electrode off-gas and the air electrode off-gas in the combustor 22 is transmitted to the evaporator 25. The evaporator 25 evaporates water (raw water) supplied from the water supply system 80 to generate water vapor, and increases the temperature of the generated water vapor. In the combustor 22, combustion exhaust gas is generated, and the generated combustion exhaust gas exchanges heat with air supplied from the air supply system 50 to the air electrode in the heat exchanger 24, then passes through the combustion exhaust gas pipe 72, passes through the exhaust heat recovery system 70, and is discharged to the outside air.

The fuel supply system 40 includes a hydrogen supply pipe 31 having one end connected to the hydrogen tank 2, a branch pipe 41 branching from the other end of the hydrogen supply pipe 31 to each power generation module 20, and a hydrogen blower 42 disposed in each branch pipe 41. By operating the hydrogen blower 42, the hydrogen gas in the hydrogen tank 2 is pumped (supplied) to the power generation module 20. Since the hydrogen blower 42 is disposed in each branch pipe 41, the supply amount of the hydrogen gas can be controlled for each power generation module 20 by individually controlling each hydrogen blower 42. An on-off valve 32 (dual valve), a negative pressure preventing valve (not illustrated), and the like are arranged in the hydrogen supply pipe 31, and a zero governor 43 (equalizer valve), a flow rate sensor 44, and the like are arranged in each branch pipe 41 in addition to the hydrogen blower 42. The flow rate sensor 44 detects the flow rate (fuel flow rate Fg) of hydrogen gas (fuel gas) flowing through the branch pipe 41 per unit time. The hydrogen gas introduced into the power generation module 20 is increased in temperature by heat exchange with the fuel electrode off-gas in the heat exchanger 23, and then supplied to the fuel electrode of the fuel cell stack 21.

The air supply system 50 includes an air supply pipe 51 connected to each power generation module 20, a filter 52 provided at an inlet of each air supply pipe 51, and an air blower 53 disposed in each air supply pipe 51. By operating the air blower 53, air is sucked from the filter 52 and the sucked air is pumped (supplied) to the power generation module 20. Since the air blower 53 is disposed in each air supply pipe 51, the supply amount of air can be controlled for each power generation module 20 by individually controlling each air blower 53. A flow rate sensor 54 is disposed in each air supply pipe 51. The flow rate sensor 54 detects the flow rate (air flow rate Fa) of air flowing through the air supply pipe 51 per unit time. Air introduced into the power generation module 20 is increased in temperature by heat exchange with combustion exhaust gas in the heat exchanger 24, and then supplied to the air electrode of the fuel cell stack 21.

The circulation system 60 includes the condenser 61 having individual heat exchange flow paths for the individual power generation modules 20, the fuel electrode off-gas pipe 62 having one end connected to each power generation module 20 (fuel electrode side of the fuel cell stack 21) and the other end connected to an inlet of each heat exchange flow path of the condenser 61, the fuel electrode off-gas pipe 63 having one end connected to an outlet of each heat exchange flow path of the condenser 61 and the other end connected to each power generation module 20 (combustor 22 side), a circulation pipe 64 connecting the condenser 61 and a heat utilizing apparatus, and a circulation pump 65 disposed in the circulation pipe 64. The fuel electrode off-gas discharged from the fuel electrode side of the fuel cell stack 21 is supplied to the combustor 22 after water vapor contained in the fuel electrode off-gas is removed by the condenser 61 through heat exchange with a heat exchange medium circulating in the circulation pipe 64 by operating the circulation pump 65. Water obtained by condensing water vapor in the condenser 61 is stored in a water tank 81. The water stored in the water tank 81 is used as raw water in the EC mode.

In addition, the circulation system 60 includes a reflux pipe 66 that branches from the fuel electrode off-gas pipe 63 on the downstream side of the condenser 61 and is connected between the hydrogen blower 42 and the zero governor 43 in the branch pipe 41 of the fuel supply system 40, and a regulating valve 67 (electromagnetic valve) disposed in the reflux pipe 66. By opening the regulating valve 67, part of the fuel electrode off-gas that has passed through the condenser 61 can be refluxed and supplied from the fuel supply system 40 to the power generation module 20. In the present embodiment, by regulating the opening of the regulating valve 67, it is possible to change a reflux rate Re, which is the ratio of the reflux amount to the discharge amount of the fuel electrode off-gas from the fuel cell stack 21.

The exhaust heat recovery system 70 includes a heat exchanger 71 connected to each combustion exhaust gas pipe 72, a heat storage tank 73, a circulation pipe 74 connecting the heat exchanger 71 and the heat storage tank 73, and a circulation pump 75 disposed in the circulation pipe 74. By operating the circulation pump 75, heat (exhaust heat) of the combustion exhaust gas is recovered by heat exchange between a heat exchange fluid in the heat storage tank 73 and the combustion exhaust gas. The exhaust heat recovery system 70 also includes a circulation pipe 76 connecting the heat storage tank 73 and a heat utilizing apparatus installed in a plant or the like, and a circulation pump 77 disposed in the circulation pipe 76. By operating the circulation pump 77, the heat recovered in the heat storage tank 73 can be supplied to the heat utilizing apparatus.

The water supply system 80 includes the water tank 81 that stores water (raw water), a water supply pipe 82 having one end connected to the water tank 81, a branch pipe 83 that branches from the other end of the water supply pipe 82 to each power generation module 20, and a water pump 84 disposed in each branch pipe 83. By operating the water pump 84, the raw water in the water tank 81 is pumped (supplied) to the power generation module 20. Since the water pump 84 is disposed in each branch pipe 83, the supply amount of the raw water can be controlled for each power generation module 20 by individually controlling each water pump 84.

The evaporator 25 is connected between the branch pipe 83 of the water supply system 80 and the fuel gas supply pipe 21a. The raw water is evaporated in the evaporator 25 to be converted into water vapor. As described above, the heat exchanger 23 for performing heat exchange between the fuel gas flowing through the fuel gas supply pipe 21a and the fuel electrode off-gas discharged from the fuel cell stack 21 is disposed in the fuel gas supply pipe 21a. The heat exchanger 24 for performing heat exchange between the oxidant gas flowing through the oxidant gas supply pipe 21b and the combustion exhaust gas discharged from the combustor 22 is disposed in the oxidant gas supply pipe 21b.

The fuel cell stack 21 included in each of the plurality of power generation units 11 is connected in series to a single power conditioner 15, and the DC power generated in each fuel cell stack 21 is converted by the power conditioner 15 and supplied to a load L. A voltage sensor 91 for detecting the output voltage of the fuel cell stack 21 is disposed between the output terminals of the fuel cell stack 21 in each power generation module 20. A voltage sensor 92 for detecting the voltage (total voltage Vt) of the entire fuel cell stacks 21 is disposed between one terminal (fuel electrode terminal) of the fuel cell stack 21 disposed at one end among the fuel cell stacks 21 connected in series and the other terminal (air electrode terminal) of the fuel cell stack 21 disposed at the other end. A current sensor 93 that detects a current flowing through a power line connecting the fuel cell stacks 21 in series is disposed in the power line. The power supply terminal on the negative electrode side of the power supply 1 is electrically connected to one terminal (fuel electrode terminal) of the fuel cell stack 21 disposed at one end among the fuel cell stacks 21 connected in series via the power conditioner 15, and the power supply terminal on the positive electrode side of the power supply 1 is electrically connected to the other terminal (air electrode terminal) of the fuel cell stack 21 disposed at the other end via the power conditioner 15.

The power conditioner 15 includes a DC/DC converter and an inverter, converts DC power from each fuel cell stack 21 into AC power having a voltage (for example, AC 200 V) communicable with a system power supply, and outputs the AC power. A power supply board (not illustrated) is connected to the power conditioner 15. The power supply board converts power from each fuel cell stack 21 and the power supply 1 into DC power suitable for driving the various auxiliary machines 30, the module control device 90, and the integrated control device 100, and supplies the DC power to each of them. A cooling fan for cooling the power conditioner 15 and the power supply board and a ventilation fan (both not illustrated) are arranged in an auxiliary machine chamber in which the power conditioner 15, the power supply board, and the like are arranged.

Although not illustrated, each module control device 90 is configured as a microprocessor centered on a CPU, and includes a ROM storing a processing program, a RAM temporarily storing data, an input and output port, and a communication port in addition to the CPU. A stack correlation temperature Tst from the temperature sensor 94 disposed near the corresponding fuel cell stack 21, a voltage V from the voltage sensor 91 disposed between the output terminals of the corresponding fuel cell stack 21, a fuel flow rate Qg from the flow rate sensor 44 disposed in the corresponding branch pipe 41 of the fuel supply system 40, an air flow rate Qa from the flow rate sensor 54 disposed in the corresponding air supply pipe 51 of the air supply system 50, and the like are input to each module control device 90 via the input port. In addition, a control signal to the corresponding hydrogen blower 42 of the fuel supply system 40, a control signal to the corresponding air blower 53 of the air supply system 50, a control signal to the corresponding regulating valve 67 of the circulation system 60, a control signal to the corresponding water pump 84 of the water supply system 80, and the like are output from each module control device 90 via the output port.

The integrated control device 100 is configured as a microprocessor centered on a CPU 101, and includes a ROM 102 storing a processing program, a RAM 103 temporarily storing data, an EEPROM 104 as a nonvolatile memory, an input and output port, and a communication port in addition to the CPU 101. The total voltage Vt detected by the voltage sensor 92, a current I from the current sensor 93, and the like are input to the integrated control device 100 via the input port. In addition, a control signal to the on-off valves 4 and 32, a control signal to the circulation pump 65 of the circulation system 60, a control signal to the circulation pumps 75 and 77 of the exhaust heat recovery system 70, and the like are output from the integrated control device 100 via the output port. The integrated control device 100 is communicably connected to the integrated control device 100 via a communication bus 12, and exchanges control signals and data with each other.

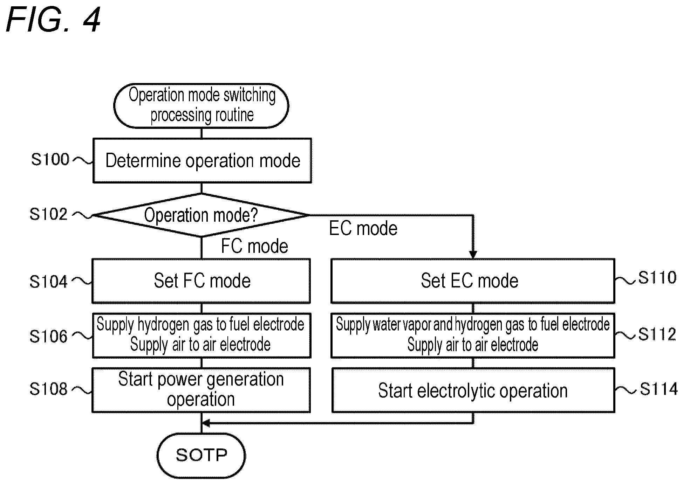

Next, an operation of the fuel cell system 10 configured as described above according to the present embodiment will be described. FIG. 4 is a flowchart illustrating an example of operation mode switching processing executed by the integrated control device 100. This processing is repeatedly executed every predetermined time.

When the operation mode switching processing is executed, the CPU 101 of the integrated control device 100 first determines an operation mode to be performed among the FC mode and the EC mode (step S100). The operation mode can be determined depending on the demand for power. For example, the FC mode can be selected in a case where the load L requests power, and the EC mode can be selected in a case where the load L does not request power. In the fuel cell system 10 that has entered into the demand response contract, the FC mode can be selected in a case where a decrease DR for reducing the demand of power is requested, and the EC mode can be selected in a case where an increase DR for increasing the demand of power is requested.

Subsequently, in a case where the determined operation mode is the FC mode (step S102), the CPU 101 causes the branch pipe 41 of the fuel supply system 40 to communicate with the fuel gas supply pipe 21a and closes the on-off valve 4, for example, to switch the path of gas (fuel gas, oxidant gas, fuel electrode off-gas, and air electrode off-gas) to be supplied to and discharged from the fuel cell stack 21 (reversibly operated solid oxide cell stack) to the FC mode path (S104). The CPU 101 transmits a control command to control various auxiliary machines 30 (hydrogen blower 42 and air blower 53) so that hydrogen gas is supplied to the fuel electrode of the fuel cell stack 21 and air is supplied to the air electrode to each module control device 90 (step S106), starts a power generation operation (step S108), and ends this routine.

On the other hand, in a case where the determined operation mode is the EC mode (step S102), the CPU 101 causes the branch pipe 41 of the fuel supply system 40 and the branch pipe 83 of the water supply system to communicate with the fuel gas supply pipe 21a and opens the on-off valve 4, for example, to switch the path of gas (fuel gas, oxidant gas, fuel electrode off-gas, and air electrode off-gas) to be supplied to and discharged from the fuel cell stack 21 (reversibly operated solid oxide cell stack) to the EC mode path (step S110). The CPU 101 transmits a control command to control various auxiliary machines 30 (hydrogen blower 42, air blower 53, and water pump 84) so that water vapor and a small amount of hydrogen gas are supplied to the fuel electrode of the fuel cell stack 21 and air is supplied to the air electrode to each module control device 90 (step S112), starts an electrolytic operation by supplying required power from the power supply 1 between the electrodes of each fuel cell stack 21 (step S114), and ends this routine.

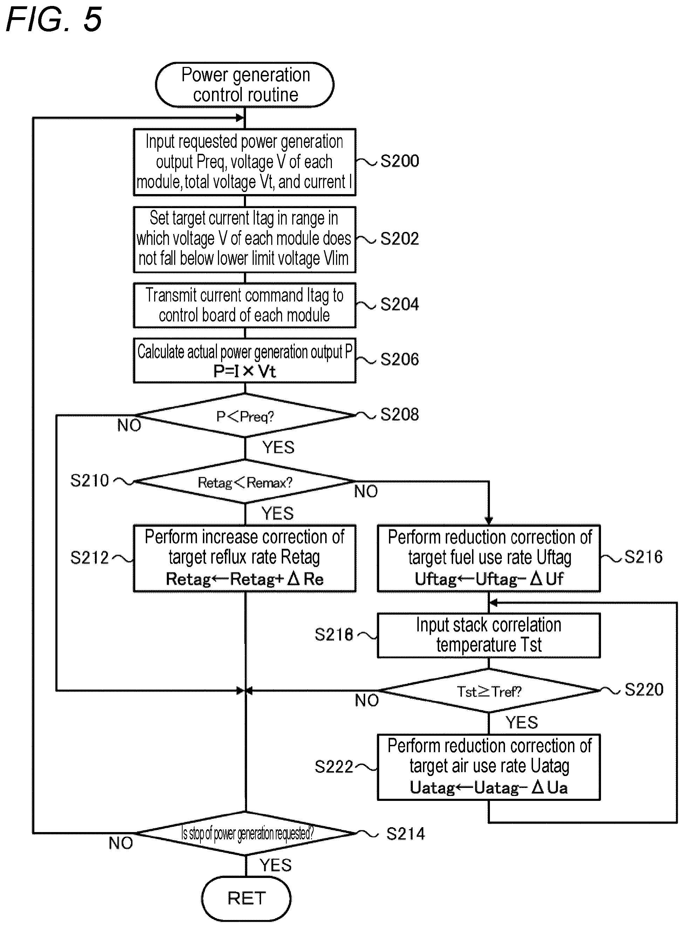

Next, details of the power generation operation (FC mode) will be described. FIG. 5 is a flowchart illustrating an example of a power generation control routine executed by the CPU 101 of the integrated control device 100. This routine is executed when the operation is started in the FC mode.

When the power generation control routine is executed, the CPU 101 first inputs data necessary for control, such as a requested power generation output (requested generated power) Preq required for the fuel cell system 10, the voltage V of the fuel cell stack 21 in each power generation module 20 from the voltage sensor 91, the total voltage Vt from the voltage sensor 92, and the current I from the current sensor 93 (step S200). It is assumed that the voltage V input from the voltage sensor 91 to each module control device 90 is input from the module control device 90 through communication.

Subsequently, the CPU 101 sets a target current Itag to be output from the fuel cell stack 21 of each power generation module 20 within a range in which the voltage V does not fall below a lower limit voltage Vlim on the basis of the requested power generation output Preq and the voltage V of each power generation module 20 (S202). Specifically, the CPU 101 sets, as an upper limit current Imax, the highest current in a range in which the lowest voltage Vmin among voltages V of the fuel cell stacks 21 of the power generation modules 20 does not fall below the lower limit voltage Vlim, sets, as a requested current Ireq, a value obtained by dividing the requested power generation output Preq by the total voltage Vt, and sets a smaller one of the requested current Ireq and the upper limit current Imax as the target current Itag. The CPU 101 then transmits the set target current Itag as a current command to each module control device 90 (step S204).

Each module control device 90 controls the supply amount of fuel gas (hydrogen gas) and air on the basis of the received target current Itag. The supply amount of the fuel gas is controlled by setting a target fuel flow rate Fgtag on the basis of the target current Itag in a manner that a fuel use rate Ufsystem reaches a target fuel use rate Uftag, controlling the hydrogen blower 42 in a manner that the fuel gas is supplied at the set target fuel flow rate Fgtag, and controlling the regulating valve 67 in a manner that the reflux rate Re reaches the target reflux rate Retag. Specifically, the hydrogen blower 42 is controlled by setting a fuel duty by feedback calculation based on the difference between the set target fuel flow rate Fgtag and the fuel flow rate Fg detected by the flow rate sensor 44, and driving and controlling the motor of the hydrogen blower 42 with the set fuel duty. The fuel use rate Ufsystem is a ratio of the fuel gas used by the fuel cell stack 21 to the fuel gas supplied by the fuel supply system 40 (hydrogen blower 42). The supply amount of air is controlled by setting a target air flow rate Fatag in a manner that an air use rate Ua reaches a target air use rate Uatag and controlling the air blower 53 in a manner that air is supplied at the set target air flow rate Fatag. Specifically, the air blower 53 is controlled by setting an air duty by feedback calculation based on the difference between the set target air flow rate Fatag and the air flow rate Fa detected by the flow rate sensor 54 and driving and controlling the motor of the air blower 53 with the set air duty. The air use rate Ua is a ratio of the air used by the fuel cell stack 21 to the air supplied by the air supply system 50 (air blower 53).

Next, the CPU 101 calculates an actual power generation output P of the entire fuel cell system 10 by multiplying the current I input in step S200 by the total voltage Vt (step S206), and determines whether or not the actual power generation output P is less than the requested power generation output Preq (step S208). When determining that the actual power generation output P is not less than the requested power generation output Preq, the CPU 101 determines that the actual power generation output P is not insufficient, and ends this routine.

On the other hand, when determining that the actual power generation output P is less than the requested power generation output Preq, the CPU 101 determines that the actual power generation output P is insufficient, and determines whether or not the target reflux rate Retag is less than a predetermined upper limit value Remax (step S210). When determining that the target reflux rate Retag is less than the upper limit value Remax, the CPU 101 sets a value obtained by adding a predetermined value ΔRe to the current target reflux rate Retag as a new target reflux rate Retag and transmits the set target reflux rate Retag to the corresponding module control device 90 (step S212). The voltage V of the fuel cell stack 21 can be expressed by the following Formula (1). In Formula (1), "η" is efficiency per unit calorific value, "-ΔH" is an enthalpy difference before and after the reaction when hydrogen and oxygen react to generate water, "n" is the number of moles of fuel gas, and "F" is a Faraday constant. "Ufstack" is a ratio of the fuel gas used by the fuel cell stack 21 to the fuel gas supplied to the fuel electrode of the fuel cell stack 21. In the fuel cell system 10 of the present embodiment, since the fuel electrode off-gas discharged from the fuel cell stack 21 is refluxed to the fuel supply system 40, the fuel use rate Ufstack is different from the fuel use rate Ufsystem. Formula (1) shows that the voltage V of the fuel cell stack 21 increases as the fuel use rate Ufstack decreases. The fuel use rate Ufstack can be expressed by the following Formula (2). Formula (2) shows that in a case where the fuel use rate Ufsystem is constant, that is, the supply amount of fuel gas is constant, the fuel use rate Ufstack decreases as the reflux rate Re increases. When Formula (2) is substituted into Formula (1), it is found that the voltage V of the fuel cell stack 21 increases as the reflux rate Re increases. Therefore, even if the target current Itag is limited by the lower limit voltage Vlim, by performing the increase correction of the target reflux rate Retag, the voltage V of the corresponding fuel cell stack 21 can be increased and the actual power generation output P can also be increased. As a result, it is possible to eliminate the shortage of the output with respect to the requested power generation output Preq while preventing the voltage V of each fuel cell stack 21 from falling below the lower limit voltage Vlim. In the present embodiment, the increase correction of the target reflux rate Retag is performed by increasing stepwise the target reflux rate Retag by the predetermined value ΔRe until the actual power generation output P becomes equal to or larger than the requested power generation output Pref or the target reflux rate Retag reaches the upper limit value Remax. The increase correction of the target reflux rate Retag may be uniformly performed on all the plurality of power generation modules 20, or may be performed in order from the power generation module 20 having a lower voltage V among the plurality of power generation modules 20. After the increase correction of the target reflux rate Retag in this manner, the CPU 101 determines whether or not the stop of the power generation operation is requested (step S214). When determining that the stop of the power generation operation is not requested, the CPU 101 returns to step S200, and when determining that the stop of the power generation operation is requested, this routine is ended.

[Mathematical Formula 1]

$$V_n = \frac{\eta \times (-\Delta H)}{n \times F} \times \frac{1}{Uf_{stack}} \quad \cdots (1)$$

$$Uf_{stack} = \frac{Uf_{system} \times (1 - Re)}{1 - Uf_{system} \times Re} \quad \cdots (2)$$

When determining that the target reflux rate Retag is equal to or higher than the upper limit value Remax in step S210, the CPU 101 sets a value obtained by subtracting a predetermined value ΔUf (for example, 1%) from the current target fuel use rate Uftag (in the present embodiment, the target value of the fuel use rate Ufsystem) as a new target fuel use rate Uftag and transmits the set target fuel use rate Uftag to the corresponding module control device 90 (step S216). By performing the reduction correction of the target fuel use rate Uftag with Formula (1), the voltage V of the corresponding fuel cell stack 21 can be increased and the actual power generation output P can be increased. As a result, it is possible to eliminate the shortage of the output with respect to the requested power generation output Preq while preventing the voltage V of each fuel cell stack 21 from falling below the lower limit voltage Vlim. In the present embodiment, the reduction correction of the target fuel use rate Uftag is performed by reducing stepwise the target fuel use rate Uftag by the predetermined value ΔUf until the actual power generation output P becomes equal to or larger than the requested power generation output Pref. In addition, the reduction correction of the target fuel use rate Uftag may be performed uniformly on all the plurality of power generation modules 20, or may be performed in order from the power generation module 20 having a lower voltage V among the plurality of power generation modules 20.

Next, the CPU 101 inputs the stack correlation temperature Tst from the temperature sensor 94 (step S218), and determines whether or not the input stack correlation temperature Tst is equal to or higher than a predetermined temperature Tref (step S220). The predetermined temperature Tref is determined to be a temperature near the upper limit in the appropriate temperature range of the fuel cell stack 21. When determining that the stack correlation temperature Tst is not equal to or higher than the predetermined temperature Tref, the CPU 101 determines that the temperature of the fuel cell stack 21 is within the appropriate temperature range, and proceeds to step S214. On the other hand, when determining that the stack correlation temperature Tst is equal to or higher than the predetermined temperature Tref, the CPU 101 determines that the stack correlation temperature Tst has reached the vicinity of the upper limit in the appropriate temperature range, in order to cool the fuel cell stack 21, sets a value obtained by subtracting a predetermined value ΔUa (for example, 1%) from the current target air use rate Uatag as a new target air use rate Uatag, transmits the set target air use rate to the corresponding module control device 90 (step S222), and returns to step S218. As described above, when the fuel use rate Ufsystem is reduced, the fuel electrode off-gas increases, and the temperature of the fuel cell stack 21 is increased by the combustion of the fuel electrode off-gas in the combustor 22. Therefore, when the stack correlation temperature Tst is equal to or higher than the predetermined temperature Tref, the fuel cell stack 21 is cooled by air by reducing the target air use rate Uatag. In the present embodiment, the reduction correction of the target air use rate Uatag is performed by reducing stepwise the target air use rate Uatag by the predetermined value ΔUa until the stack correlation temperature Tst becomes lower than the predetermined temperature Tref. When determining that the stack correlation temperature Tst is lower than the predetermined temperature Tref in step S220, the CPU 101 proceeds to step S214. Then, when the stop of the power generation operation is not requested in step S214, the CPU 101 returns to S200, and when the stop of the power generation operation is requested, this routine is ended.

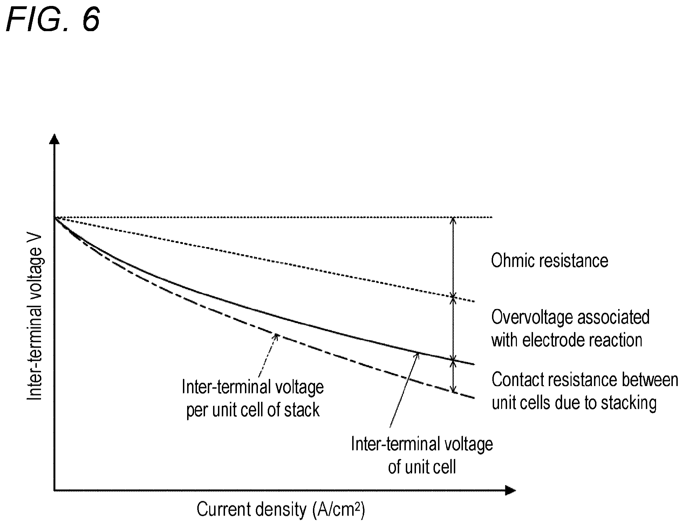

As described above, in the fuel cell system 10 of the present embodiment, the voltage V of the fuel cell stack 21 is increased by increasing the target reflux rate Retag or reducing the target fuel use rate Uftag, and the actual power generation output P is increased without increasing the current swept from the fuel cell stack 21. As illustrated in FIG. 6, the voltage drop of the unit cell is caused by an ohmic resistance, an overvoltage associated with an electrode reaction between the fuel electrode and the air electrode, and a contact resistance between the unit cells due to stacking. As the current density increases, the ohmic resistance, the overvoltage, and the like increase, and the inter-terminal voltage of the unit cell decreases. That is, as the current density increases, the voltage V of the fuel cell stack 21 decreases. The current density can be replaced by the oxidation reaction rate of the fuel electrode. When the current (target current Itag) swept from the fuel cell stack 21 is increased, the movement amount of oxygen ions ($O^{2-}$) from the air electrode increases, and $H_2O$ increases at the fuel electrode. The increase in $H_2O$ causes oxidation of the material (Ni) of the fuel electrode to proceed because of the following chemical reaction ($Ni + H_2O \rightarrow NiO + H_2$), so that the fuel electrode is deteriorated, that is, the fuel cell stack 21 is deteriorated. In the fuel cell system 10 of the present embodiment, by increasing the voltage V of the fuel cell stack 21, the increase in current (current density) swept from the fuel cell stack 21 with respect to the requested power generation output Preq can be suppressed, so that the deterioration of the fuel cell stack 21 can be suppressed to prolong the life.

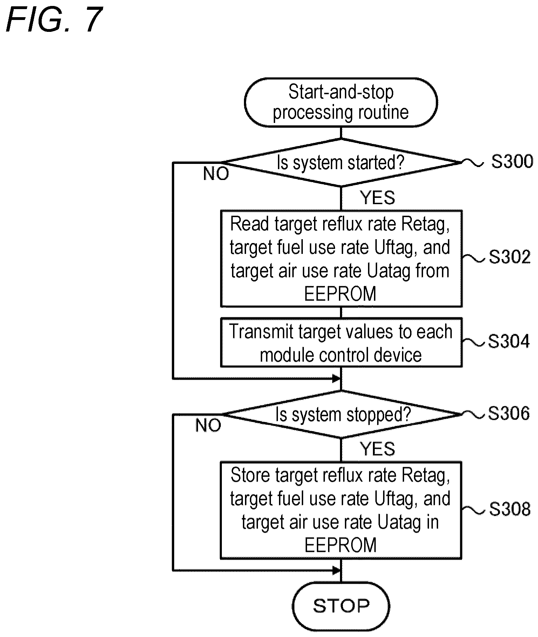

Next, an operation when the fuel cell system 10 is started and stopped in the FC mode will be described. FIG. 7 is a flowchart illustrating an example of a start-and-stop processing routine executed by the CPU 101 of the integrated control device 100. This routine is repeatedly executed every predetermined time.

When the start-and-stop processing routine is executed, the CPU 101 first determines whether or not it is the timing when the system is started (step S300). When determining that it is the timing when the system is started, the CPU 101 reads the target reflux rate Retag, the target fuel use rate Uftag, and the target air use rate Uatag of each power generation module 20 stored in the predetermined area of the EEPROM 104 (step S302), transmits the read target values to the module control device 90 of the corresponding power generation module 20 (step S304), and proceeds to step S306. As described above, the module control device 90 controls the supply amount of fuel gas or air using each received target value. When determining that it is not the timing when the system is started, the CPU 101 proceeds to step S306.

Next, the CPU 101 determines whether or not it is the timing when the system is stopped (step S306). When determining that it is not the timing when the system is stopped, the CPU 101 ends this routine. On the other hand, when determining that it is the timing when the system is stopped, the CPU 101 stores the current target reflux rate Retag, target fuel use rate Uftag, and target air use rate Uatag of each power generation module 20 in a predetermined area of the EEPROM 104 (step S308), and ends this routine. As described above, the CPU 101 stores the target reflux rate Retag, the target fuel use rate Uftag, and the target air use rate Uatag in the EEPROM 104 when the system is stopped, reads the target reflux rate Retag, the target fuel use rate Uftag, and the target air use rate Uatag from the EEPROM 104 when the system is started, and transmits the read values to the corresponding module control device 90, so that the operation of each power generation module 20 can be appropriately performed even in a case where the system is stopped and started.

In fuel cell system 10 of the present embodiment described above, the individual fuel cell stacks 21 are connected in series between the plurality of power generation modules 20, and the target current Itag is set in a manner that the output based on the requested power generation output Preq required for the system is obtained within a range in which the voltage V of each fuel cell stack 21 in each of the plurality of power generation modules 20 does not fall below the lower limit voltage Vlim, and is transmitted to each module control device 90. As a result, the fuel cell system 10 capable of obtaining a large output with a simple configuration can be obtained.

In addition, in the fuel cell system 10 of the present embodiment, in a case where the actual power generation output P is insufficient with respect to the requested power generation output Preq, the target fuel use rate Uftag is reduced. By reducing the target fuel use rate Uftag, the voltage V of the corresponding fuel cell stack 21 can be increased, and the actual power generation output P can be increased. As a result, it is possible to eliminate the shortage of the output with respect to the requested power generation output Preq while preventing the voltage V of each fuel cell stack 21 from falling below the lower limit voltage Vlim. Furthermore, since the target fuel use rate Uftag is reduced stepwise by the predetermined value ΔUf until the shortage of the actual power generation output P with respect to the requested power generation output Preq is eliminated, the shortage of the actual power generation output P with respect to the requested power generation output Preq can be eliminated without rapidly changing (pulsating) the power generation state (current and voltage) of the fuel cell stack 21. In the fuel cell system 10 of the present embodiment, in a case where the stack correlation temperature Tst is equal to or higher than the predetermined temperature Tref, the target air use rate Uatag in the corresponding fuel cell stack 21 is reduced. When the fuel use rate Ufsystem is reduced, fuel off-gas increases, and the temperature of the fuel cell stack 21 is increased by the combustion of the fuel off-gas. Therefore, by reducing the target air use rate Uatag, the fuel cell stack 21 can be cooled by air, and the fuel cell stack 21 can be maintained in an appropriate temperature range.

In the fuel cell system 10 of the present embodiment, in a case where the actual power generation output P is insufficient with respect to the requested power generation output Preq, the target reflux rate Retag is increased. Since the voltage V of the fuel cell stack 21 increases as the reflux rate Re increases, even if the target current Itag is limited by the lower limit voltage Vlim, the voltage V of the corresponding fuel cell stack 21 can be increased by increasing the target reflux rate Retag, and the actual power generation output P can be increased. As a result, it is possible to eliminate the shortage of the output with respect to the requested power generation output Preq while preventing the voltage V of each fuel cell stack 21 from falling below the lower limit voltage Vlim. Furthermore, since the target reflux rate Retag is reduced stepwise by the predetermined value ΔRe until the shortage of the actual power generation output P with respect to the requested power generation output Preq is eliminated, the shortage of the actual power generation output P with respect to the requested power generation output Preq can be eliminated without rapidly changing (pulsating) the power generation state (current and voltage) of the fuel cell stack 21.

In the fuel cell system 10 of the present embodiment, when the system is stopped, the target reflux rate Retag, the target fuel use rate Uftag, and the target air use rate Uatag are stored in the EEPROM 104, and when the system is started, the target reflux rate Retag, the target fuel use rate Uftag, and the target air use rate Uatag are read from the EEPROM 104 and transmitted to the corresponding module control device 90. Therefore, even in a case where the system is stopped and started, the operation of each power generation module 20 can be appropriately performed.

In the fuel cell system 10 of the present embodiment, the fuel cell stack 21 is configured as a reversibly operated solid oxide cell stack, and includes the power generation operation (FC mode) and the electrolytic operation (EC mode) as operation modes. As a result, it is possible to handle the supply and demand of power.

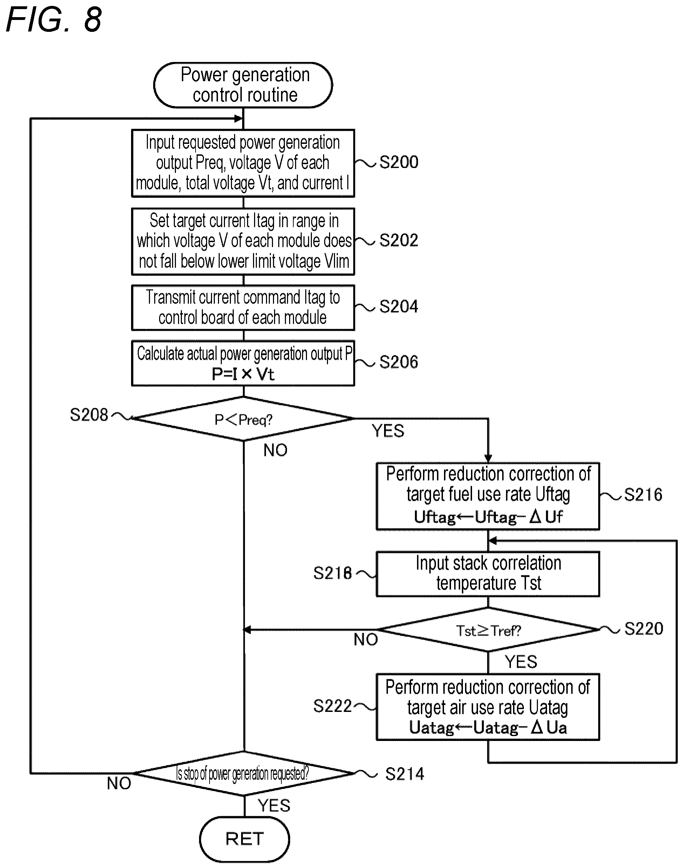

In the embodiment described above, the circulation system 60 includes the reflux pipe 66 that refluxes fuel off-gas to the branch pipe 41 and the regulating valve 67 disposed in the reflux pipe 66, but an orifice may be provided instead of the regulating valve 67. The reflux pipe 66 may be omitted. In these cases, since the reflux rate Re cannot be changed, the CPU 101 of the integrated control device 100 may execute the power generation control routine in FIG. 8 in which steps S210 and S212 are omitted instead of the power generation control routine in FIG. 5.

In the embodiment described above, in the FC mode, the fuel supply system 40 supplies hydrogen gas as fuel gas to the fuel electrode of the fuel cell stack 21. However, raw fuel gas such as natural gas or LP gas may be reformed into fuel gas containing hydrogen gas and supplied to the fuel electrode of the fuel cell stack 21. In this case, the fuel supply system may include a gas pump that pumps raw fuel gas to the branch pipe 41 and a desulfurizer that removes a sulfur component in the raw fuel gas, and may include an evaporator that receives supply of water (reformed water) stored in the water tank 81 and generates water vapor and a reformer that reforms the raw fuel gas into fuel gas using the water vapor from the evaporator in the module case 29.

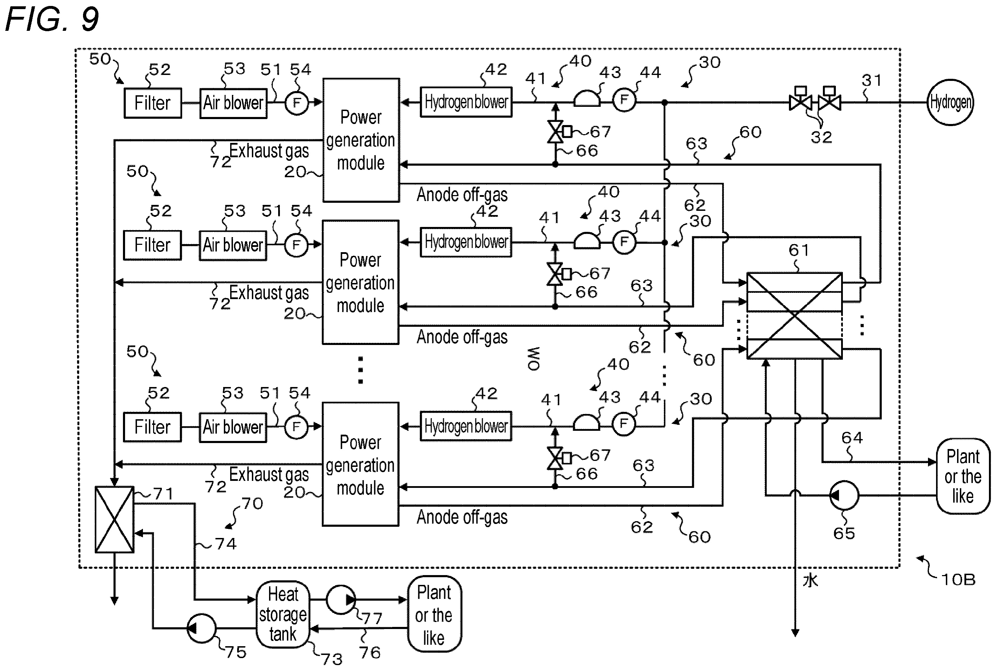

In the embodiment described above, the FC mode and the EC mode are provided as the operation modes of the fuel cell system 10, but the EC mode does not need to be provided. In this case, as illustrated in a fuel cell system 10B of a modification in FIG. 9, the hydrogen recovery system such as the hydrogen tank 2, the collecting pipe 3, and the on-off valve 4, and the water supply system 80 such as the water tank 81, the water supply pipe 82, the branch pipe 83, and the water pump 84 may be omitted, and a hydrogen supply source may be connected to the hydrogen supply pipe 31 instead.

In the embodiment described above, each of the plurality of power generation modules 20 included in the fuel cell system 10 includes one fuel cell stack 21. However, all or some of the plurality of power generation modules 20 may include a plurality of fuel cell stacks 21 connected in series.

In the embodiment described above, the module control device 90 and the integrated control device 100 are configured by separate control units, but may be configured by a single control unit.

The correspondence between the main elements of the embodiment and the main elements of the invention described in the section of SOLUTIONS TO PROBLEMS will be described. In the embodiment, the fuel cell stack 21 corresponds to "fuel cell stack", the power generation module 20 corresponds to "power generation module", various auxiliary machines 30 including the fuel supply system 40, the air supply system 50, the circulation system 60, and the like correspond to "auxiliary machine", the module control device 90 corresponds to "individual control unit", and the integrated control device 100 corresponds to "integrated control unit". The EEPROM 104 corresponds to "storage unit". The combustor 22 corresponds to "combustion unit", and the temperature sensor 94 corresponds to "temperature sensor". The reflux pipe 66 corresponds to "reflux path", and the regulating valve 67 corresponds to "regulating unit".

It should be noted that, since the embodiment is an example for specifically describing the mode for carrying out the invention described in the section of SOLUTIONS TO PROBLEMS, the correspondence between the main elements of the embodiment and the main elements of the invention described in the section of SOLUTIONS TO PROBLEMS does not limit the elements of the invention described in the section of SOLUTIONS TO PROBLEMS. That is, the invention described in the section of SOLUTIONS TO PROBLEMS should be interpreted on the basis of the description in the section, and the embodiment is merely a specific example of the invention described in the section of SOLUTIONS TO PROBLEMS.

[Summary of Present Embodiment]

As described above, a fuel cell system (10) according to the present disclosure including a plurality of power generation modules (20) each of which includes one or more fuel cell stacks (21) that generate power by a reaction between fuel gas and oxidant gas and an auxiliary machine (30) that controls fuel gas and oxidant gas to be supplied to the fuel cell stacks (21), in which fuel cell stacks (21) are connected in series between the plurality of power generation modules (20), the fuel cell system (10) including a plurality of individual control units (90) each of which controls an auxiliary machine (30) of a corresponding power generation module (20) among the plurality of power generation modules (20) based on a control command, and an integrated control unit (100) that sets a current command in a manner that an output based on a requested output required for a system (10) is obtained within a range in which a voltage of each fuel cell stack (21) in each of the plurality of power generation modules (20) does not fall below a lower limit voltage, and transmits the current command to the plurality of individual control units (90) (S202, S204).

In the fuel cell system according to the present disclosure, the individual fuel cell stacks are connected in series between the plurality of power generation modules, the current command is set in a manner that the output based on the requested output required for the system is obtained within the range in which the voltage of each fuel cell stack in each of the plurality of power generation modules does not fall below the lower limit voltage, and the current command is transmitted to the individual control unit that controls each of the power generation modules. As a result, it is possible to provide a fuel cell system capable of obtaining a large output with a simple configuration.

In the fuel cell system (10) according to the present disclosure, in a case where an actual output is insufficient for the requested output, the integrated control unit (100) may transmit a control command to control the auxiliary machine so as to increase a voltage of the fuel cell stack (S206, S208: YES, S210, S212, S216).

By increasing the voltage of the fuel cell stack through the control of the auxiliary machine, the actual output can be increased without the voltage falling below the lower limit voltage, and the requested output can be handled. The voltage drop of the unit cell is caused by an ohmic resistance, an overvoltage associated with an electrode reaction, and the like. As the current density increases, the ohmic resistance, the overvoltage, and the like increase, and the inter-terminal voltage of the unit cell decreases. That is, the voltage of the fuel cell stack decreases. The current density can be replaced by the oxidation reaction rate of the fuel electrode, and when the current swept from the fuel cell stack is increased, the oxidation of the fuel electrode proceeds, leading to the deterioration of the fuel cell stack. In the fuel cell system of the present disclosure, by increasing the voltage of the fuel cell stack, it is possible to suppress an increase in the current swept with respect to the requested output, and thus, it is possible to suppress the deterioration of the fuel cell stack and to prolong the life.

In the fuel cell system (10) according to the present disclosure in which the voltage of the fuel cell stack is increased through the control of the auxiliary machine, each of the plurality of individual control units (90) may control a corresponding auxiliary machine (30) in a manner that a use rate of fuel gas in a corresponding fuel cell stack (21) reaches a target use rate, and in a case where an actual output is insufficient for the requested output, the integrated control unit (100) may reduce a target use rate of the fuel gas (S206, S208: YES, S216).

This is based on the fact that the voltage of the fuel cell stack increases as the use rate of the fuel gas decreases.

In this case, the integrated control unit (100) may gradually reduce a target use rate of the fuel gas until a shortage of an actual output with respect to the requested output is eliminated.

In this way, the shortage of the actual output with respect to the requested output can be eliminated without rapidly changing (pulsating) the power generation state (current and voltage) of the fuel cell stack.

In this case, the fuel cell system further includes a storage unit (104) that stores a current target use rate of the fuel gas, when a system (10) is stopped and then started, the integrated control unit (100) may start an operation of a corresponding power generation module (20) at a target use rate of the fuel gas stored in the storage unit (104) (S300, S302, S304, S306, S308).

As a result, even in a case where the system is stopped and started, the operation of each power generation module can appropriately be performed.

In these cases, each of the plurality of power generation modules (20) includes a combustion unit (22) that combusts off-gas discharged from a corresponding fuel cell stack (21), and a temperature sensor (94) that detects a temperature correlated with a temperature of a corresponding fuel cell stack (21), each of the plurality of individual control units (90) may control a corresponding auxiliary machine (30) in a manner that a use rate of oxidant gas in a corresponding fuel cell stack (21) reaches a target use rate, and the integrated control unit (100) may reduce a target use rate of the oxidant gas in a corresponding fuel cell stack (21) in a case where a temperature detected by the temperature sensor (94) is equal to or higher than a predetermined temperature (S218, S220: YES, S222).

When the use rate of the fuel gas decreases, off-gas increases, and the temperature of the fuel cell stack increases due to the combustion of the off-gas in the combustion unit. Therefore, by reducing the target use rate of the oxidant gas, the oxidant gas can be increased, and the excessive increase in the temperature of the fuel cell stack can be suppressed by the oxidant gas.

In this case, the fuel cell system further includes a storage unit (104) that stores a current target use rate of the oxidant gas, when a system (10) is stopped and then started, the integrated control unit (100) may start an operation of a corresponding power generation module (20) at a target use rate of the oxidant gas stored in the storage unit (104) (S300, S302, S304, S306, S308).

As a result, even in a case where the system is stopped and started, the operation of each power generation module can appropriately be performed.

In the fuel cell system (10) according to the present disclosure in which the voltage of the fuel cell stack is increased through the control of the auxiliary machine, each of the plurality of power generation modules (20) includes a reflux path (66) that refluxes fuel off-gas discharged from a corresponding fuel cell stack (21) to a fuel gas supply path (41), and a regulating unit (67) that is provided in the reflux path (66) and regulates a reflux rate of the fuel off-gas, and the integrated control unit (100) may increase the reflux rate in a case where an actual output is insufficient for the requested output (S206, S208: YES, S212).

This is based on the fact that the voltage of the fuel cell stack increases as the use rate of the fuel gas decreases, and in a case where the supply flow rate of the fuel gas is constant, the use rate of the fuel gas decreases as the reflux rate increases.

In this case, the integrated control unit (100) may gradually increase the reflux rate until a shortage of an actual output with respect to the requested output is eliminated or the reflux rate reaches an upper limit value.

In this way, the shortage of the actual output with respect to the requested output can be eliminated without rapidly changing (pulsating) the power generation state (current and voltage) of the fuel cell stack.

Furthermore, in this case, the fuel cell system further includes a storage unit (104) that stores a current reflux rate, when a system (10) is stopped and then started, the integrated control unit (100) may start an operation of a corresponding power generation module (20) at the reflux rate stored in the storage unit (104) (S300, S302, S304, S306, S308).

As a result, even in a case where the system is stopped and started, the operation of each power generation module can appropriately be performed.

In the fuel cell system (10) according to the present disclosure, the integrated control unit (100) may set an upper limit current in a manner that a lowest voltage among voltages of individual fuel cell stacks (21) connected in series between the plurality of power generation modules (20) does not fall below a lower limit voltage, set a requested current based on the requested output and a voltage of entire fuel cell stacks, and set the current command based on a smaller one of the requested current and the upper limit current.

In this way, it is possible to handle the requested output without proceeding the deterioration of each fuel cell stack.

Furthermore, in the fuel cell system (10) according to the present disclosure, the fuel cell stack (21) is a reversibly operated solid oxide cell stack performable a power generation operation of generating power by a reaction between fuel gas and oxidant gas and an electrolytic operation of generating hydrogen by high-temperature steam electrolysis, and the integrated control unit (100) may transmit a control command to a corresponding individual control unit (90) so as to switch the power generation operation and the electrolytic operation.

As a result, it is possible to handle the supply and demand of power.

Although the mode for carrying out the present disclosure has been described above with reference to the embodiment, the present disclosure is not limited to such embodiment at all, and can be carried out in various forms without departing from the gist of the present disclosure.

INDUSTRIAL APPLICABILITY

The present disclosure is applicable to a fuel cell system manufacturing industry.

REFERENCE SIGNS LIST

10: Fuel cell system, 20: Power generation module, 21: Fuel cell stack, 22: Combustor (Combustion unit), 30: Auxiliary machine, 41: Branch pipe (Supply path), 66: Reflux path, 67: Regulating valve (Regulating unit), 90: Module control device (Individual control unit), 94: Temperature sensor, 100: Integrated control device (Integrated control unit), and 104: EEPROM (Storage unit)

**Claims**

1. A fuel cell system comprising a plurality of power generation modules each of which includes one or more fuel cell stacks that generate power by a reaction between fuel gas and oxidant gas and an auxiliary machine that controls fuel gas and oxidant gas to be supplied to the fuel cell stacks, in which fuel cell stacks are connected in series between the plurality of power generation modules, the fuel cell system comprising:

   a plurality of individual control units each of which controls an auxiliary machine of a corresponding power generation module among the plurality of power generation modules based on a control command; and
   an integrated control unit that sets a current command in a manner that an output based on a requested output required for a system is obtained within a range in which a voltage of each fuel cell stack in each of the plurality of power generation modules does not fall below a lower limit voltage, and transmits the current command to the plurality of individual control units.

2. The fuel cell system according to claim 1, wherein
   in a case where an actual output is insufficient for the requested output, the integrated control unit transmits a control command to control the auxiliary machine so as to increase a voltage of the fuel cell stack.

3. The fuel cell system according to claim 2, wherein

   each of the plurality of individual control units controls a corresponding auxiliary machine in a manner that a use rate of fuel gas in a corresponding fuel cell stack reaches a target use rate, and
   in a case where an actual output is insufficient for the requested output, the integrated control unit reduces a target use rate of the fuel gas.

4. The fuel cell system according to claim 3, wherein
   the integrated control unit gradually reduces a target use rate of the fuel gas until a shortage of an actual output with respect to the requested output is eliminated.

5. The fuel cell system according to claim 4, further comprising a storage unit that stores a current target use rate of the fuel gas, wherein
   when a system is stopped and then started, the integrated control unit starts an operation of a corresponding power generation module at a target use rate of the fuel gas stored in the storage unit.

6. The fuel cell system according to any one of claims 3 to 5, wherein

each of the plurality of power generation modules includes a combustion unit that combusts off-gas discharged from a corresponding fuel cell stack, and a temperature sensor that detects a temperature correlated with a temperature of a corresponding fuel cell stack,

each of the plurality of individual control units controls a corresponding auxiliary machine in a manner that a use rate of oxidant gas in a corresponding fuel cell stack reaches a target use rate, and

the integrated control unit reduces a target use rate of the oxidant gas in a corresponding fuel cell stack in a case where a temperature detected by the temperature sensor is equal to or higher than a predetermined temperature.

7. The fuel cell system according to claim 6, further comprising a storage unit that stores a current target use rate of the oxidant gas, wherein

when a system is stopped and then started, the integrated control unit starts an operation of a corresponding power generation module at a target use rate of the oxidant gas stored in the storage unit.

8. The fuel cell system according to any one of claims 2 to 5, wherein

each of the plurality of power generation modules includes a reflux path that refluxes fuel off-gas discharged from a corresponding fuel cell stack to a fuel gas supply path, and a regulating unit that is provided in the reflux path and regulates a reflux rate of the fuel off-gas, and

the integrated control unit increases the reflux rate in a case where an actual output is insufficient for the requested output.

9. The fuel cell system according to claim 8, wherein

the integrated control unit gradually increases the reflux rate until a shortage of an actual output with respect to the requested output is eliminated or the reflux rate reaches an upper limit value.

10. The fuel cell system according to claim 9, further comprising a storage unit that stores a current reflux rate, wherein when a system is stopped and then started, the integrated control unit starts an operation of a corresponding power generation module at the reflux rate stored in the storage unit.

11. The fuel cell system according to any one of claims 1 to 5, wherein the integrated control unit sets an upper limit current in a manner that a lowest voltage among voltages of individual fuel cell stacks connected in series between the plurality of power generation modules does not fall below a lower limit voltage, sets a requested current based on the requested output and a voltage of entire fuel cell stacks, and sets the current command based on a smaller one of the requested current and the upper limit current.

12. The fuel cell system according to any one of claims 1 to 5, wherein

the fuel cell stack is a reversibly operated solid oxide cell stack performable a power generation operation of generating power by a reaction between fuel gas and oxidant gas and an electrolytic operation of generating hydrogen by high-temperature steam electrolysis, and

the integrated control unit transmits a control command to a corresponding individual control unit so as to switch the power generation operation and the electrolytic operation.

FIG. 1

EP 4 664 570 A1

## FIG. 2

EP 4 664 570 A1

# FIG. 3

FIG. 4

```
        ┌──────────────────────────┐
        │  Operation mode switching │
        │     processing routine    │
        └──────────────────────────┘
                     │
S100 ──┌──────────────────────────┐
       │  Determine operation mode │
       └──────────────────────────┘
                     │
S102 ──◇──── Operation mode? ────◇───────────────┐
          │                          EC mode      │
          │  FC mode                               │
          ▼                                        ▼
S104 ──┌─────────────────┐       ┌──────────────────────┐── S110
       │    Set FC mode   │       │      Set EC mode      │
       └─────────────────┘       └──────────────────────┘
          │                                        │
S106 ──┌─────────────────────────┐  ┌──────────────────────────────────────┐── S112
       │Supply hydrogen gas to fuel│  │Supply water vapor and hydrogen gas to fuel electrode│
       │        electrode          │  │       Supply air to air electrode     │
       │  Supply air to air electrode│  └──────────────────────────────────────┘
       └─────────────────────────┘
          │                                        │
S108 ──┌─────────────────┐       ┌──────────────────────┐── S114
       │ Start power generation│   │ Start electrolytic operation│
       │      operation     │     └──────────────────────┘
       └─────────────────┘                          │
                     │◄─────────────────────────────┘
                     ▼
              ┌──────────┐
              │   SOTP    │
              └──────────┘
```

## FIG. 5

Power generation control routine

Input requested power generation output Preq, voltage V of each module, total voltage Vt, and current I — S200

Set target current Itag in range in which voltage V of each module does not fall below lower limit voltage Vlim — S202

Transmit current command Itag to control board of each module — S204

Calculate actual power generation output P
$$P = I \times Vt$$ — S206

$P < Preq?$ — S208
NO / YES

$Retag < Remax?$ — S210
YES / NO

Perform increase correction of target reflux rate Retag
$$Retag \leftarrow Retag + \Delta Re$$ — S212

Perform reduction correction of target fuel use rate Uftag
$$Uftag \leftarrow Uftag - \Delta Uf$$ — S216

Input stack correlation temperature Tst — S218

$Tst \geq Tref?$ — S220
NO / YES

Perform reduction correction of target air use rate Uatag
$$Uatag \leftarrow Uatag - \Delta Ua$$ — S222

Is stop of power generation requested? — S214
NO / YES

RET

## FIG. 6

# FIG. 7

```
        ┌─────────────────┐
        │  Start-and-stop │
        │ processing routine │
        └─────────────────┘
                 │
    NO   ◇ Is system started? ◇ ～S300
  ┌──────      │
  │           YES
  │  ┌─────────────────────────┐
  │  │ Read target reflux rate Retag, │
  │  │ target fuel use rate Uftag, and │ ～S302
  │  │ target air use rate Uatag from │
  │  │        EEPROM          │
  │  └─────────────────────────┘
  │  ┌─────────────────────────┐
  │  │ Transmit target values to each │ ～S304
  │  │   module control device   │
  │  └─────────────────────────┘
  │           │
  └───────────┤
    NO   ◇ Is system stopped? ◇ ～S306
  ┌──────      │
  │           YES
  │  ┌─────────────────────────┐
  │  │ Store target reflux rate Retag, │
  │  │ target fuel use rate Uftag, and │ ～S308
  │  │ target air use rate Uatag in │
  │  │        EEPROM          │
  │  └─────────────────────────┘
  │           │
  └───────────┤
        ┌─────────┐
        │  STOP   │
        └─────────┘
```

## FIG. 8

```
        ┌─────────────────────────┐
        │   Power generation      │
        │   control routine       │
        └────────────┬────────────┘
                     │
     ┌───────────────────────────────────┐
     │ Input requested power generation  │
     │ output Preq, voltage V of each    │～S200
     │ module, total voltage Vt, and current I│
     └───────────────┬───────────────────┘
                     │
     ┌───────────────────────────────────┐
     │ Set target current Itag in range in│
     │ which voltage V of each module does│～S202
     │ not fall below lower limit voltage Vlim│
     └───────────────┬───────────────────┘
                     │
     ┌───────────────────────────────────┐
     │ Transmit current command Itag to  │～S204
     │ control board of each module      │
     └───────────────┬───────────────────┘
                     │
     ┌───────────────────────────────────┐
     │Calculate actual power generation output P│～S206
     │           P=I × Vt                 │
     └───────────────┬───────────────────┘
```

S208 — P<Preq?   — YES

NO

Perform reduction correction of target fuel use rate Uftag
Uftag←Uftag−ΔUf  ～S216

Input stack correlation temperature Tst   S218

Tst≧Tref?  ～S220   NO / YES

Perform reduction correction of target air use rate Uatag
Uatag←Uatag−ΔUa   S222

Is stop of power generation requested?  ～S214   NO

YES

RET

FIG. 9

## INTERNATIONAL SEARCH REPORT

| International application No. |
|---|
| **PCT/JP2024/003489** |

### A. CLASSIFICATION OF SUBJECT MATTER

*H01M 8/04858*(2016.01)i; *H01M 8/12*(2016.01)i; *H01M 8/249*(2016.01)i; *H01M 8/0432*(2016.01)i; *H01M 8/0656*(2016.01)i; *H01M 8/04225*(2016.01)i; *H01M 8/04302*(2016.01)i; *H01M 8/04537*(2016.01)i; *H01M 8/04746*(2016.01)i

FI: H01M8/04858; H01M8/04225; H01M8/04302; H01M8/0432; H01M8/04537; H01M8/04746; H01M8/0656; H01M8/12 101; H01M8/249

According to International Patent Classification (IPC) or to both national classification and IPC

### B. FIELDS SEARCHED

Minimum documentation searched (classification system followed by classification symbols)

H01M8/04858; H01M8/04225; H01M8/04302; H01M8/0432; H01M8/04537; H01M8/04746; H01M8/0656; H01M8/12; H01M8/249

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 7-50172 A (YOYU TANSANENGATA NENRYO DENCHI HATSUDEN SYST GIJUTSU KENKYU KUMIAI) 21 February 1995 (1995-02-21) paragraphs [0012]-[0013], [0015], fig. 1 | 1-12 |
| A | JP 2018-152206 A (TOKYO GAS CO., LTD.) 27 September 2018 (2018-09-27) paragraphs [0162]-[0180], fig. 13, 16 | 1-12 |
| A | JP 2010-92726 A (NGK SPARK PLUG CO., LTD.) 22 April 2010 (2010-04-22) paragraph [0031], fig. 2 | 3-5 |
| A | JP 2019-160570 A (DENSO CORPORATION) 19 September 2019 (2019-09-19) paragraph [0036], fig. 1, 8 | 8-10 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **29 March 2024** | **09 April 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

## INTERNATIONAL SEARCH REPORT
### Information on patent family members

International application No.

**PCT/JP2024/003489**

| Patent document cited in search report | | | Publication date (day/month/year) | Patent family member(s) | Publication date (day/month/year) |
|---|---|---|---|---|---|
| JP | 7-50172 | A | 21 February 1995 | (Family: none) | |
| JP | 2018-152206 | A | 27 September 2018 | (Family: none) | |
| JP | 2010-92726 | A | 22 April 2010 | (Family: none) | |
| JP | 2019-160570 | A | 19 September 2019 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012533146 A
- JP 2022523187 A